# FASCICULE DE BREVET EUROPEEN

(11) **EP 2 244 058 B1**
(45) Date de publication et mention de la délivrance du brevet: **12.09.2012**
(21) Numéro de dépôt: 10157331.9
(22) Date de dépôt: 23.03.2010
(51) Int. Cl.: G01B 11/06

(54) **Procédé de détermination de l'épaisseur d'un article de courrier**
Verfahren zur Bestimmung der Dicke eines Postartikels
Method for determining the thickness of a mail item.

(30) Priorité: 24.04.2009 FR 0952683
(43) Date de publication de la demande: 27.10.2010
(73) Titulaire: NEOPOST TECHNOLOGIES, 92220 Bagneux (FR)
(72) Inventeur: Mazeiller, Dominique, 95530 LA FRETTE SUR SEINE (FR)
(74) Mandataire: David, Alain

(56) Documents cités:
- FR-A- 2 762 239
- FR-A- 2 896 578
- US-A1- 2003 104 642

## Description

### Domaine de la technique

La présente invention se rapporte exclusivement au domaine du traitement de courrier et elle concerne plus particulièrement un procédé permettant la détermination avec précision de l'épaisseur d'un article de courrier lors de son déplacement dans une machine de traitement de courrier.

### Art antérieur

La tarification des articles de courrier repose sur des critères de poids et/ou de dimensions des articles de courriers (épaisseur, longueur et/ou largeur de l'enveloppe). Les dimensions des articles de courrier sont donc des paramètres importants dans les machines à affranchir et autres machines de traitement de courrier. En effet, beaucoup de services postaux dépendent du format des articles de courrier et il s'agit alors de vérifier notamment que ce format est supérieur à des seuils. Quant à la mesure de l'épaisseur, elle permet notamment, couplée à la mesure du format, d'obtenir une estimation du poids lorsque celui n'est pas disponible directement.

Or, cette mesure d'épaisseur est délicate car les articles de courrier n'ont souvent pas une épaisseur uniforme. Notamment, il est connu par la demande FR2896578 déposée au nom de la demanderesse un dispositif de mesure qui, lors de l'avancée de l'article de courrier, effectue un ensemble de mesures successives et en calcule alors la moyenne de façon à s'affranchir de ces variations d'épaisseur. Toutefois, cette valeur ne reflète pas l'épaisseur réelle de l'article de courrier et elle peut donc entrainer des erreurs dans la détermination du tarif postal. Aussi, il a été envisagé par la demanderesse de prendre en compte non la valeur moyenne mais la valeur maximale de l'épaisseur qui correspond plus à l'épaisseur réelle de l'article de courrier. Toutefois, en pratique, les résultats ne sont pas meilleurs car cette valeur maximale mesurée ne correspond pas non plus à la valeur réelle du fait des chocs successifs et rebonds suite au contact du dispositif de mesure avec les articles de courrier.

### Objet et définition de l'invention

La présente invention a donc pour objet de pallier les inconvénients précités avec un procédé de détermination de l'épaisseur d'un article de courrier qui s'affranchisse des défauts de la mesure dans une machine de traitement de courrier. Un but de l'invention est aussi de proposer un procédé de mesure simple de mise en oeuvre et qui ne nécessite pas une redéfinition de l'architecture générale de la machine à affranchir.

Ces buts sont atteints par un procédé de mesure de l'épaisseur maximale d'un article de courrier lors de son déplacement au travers d'une machine de traitement de courrier consistant en les étapes successives suivantes :
- acquisition d'une mesure d'épaisseur,
- enregistrement de la valeur mesurée dans un registre,
- détermination d'une valeur maximale et d'une valeur minimale dudit registre,
- détermination d'une différence entre lesdites deux valeurs maximale et minimale et comparaison de ladite différence avec une valeur de seuil prédéterminée, et
- si ladite différence est inférieure à ladite valeur de seuil et que ladite valeur maximale est supérieure à une valeur courante d'épaisseur maximale, prendre ladite valeur maximale comme nouvelle valeur courante d'épaisseur maximale.

Ainsi, grâce au recours à cette valeur de seuil, en s'affranchissant des valeurs aberrantes dues à des chocs ou des rebonds, il est possible de déterminer avec une très grande précision l'épaisseur des articles de courrier pendant leur déplacement.

De préférence, lesdites valeurs mesurées sont enregistrées successivement dans un registre de type FIFO à N emplacements distincts et chaque nouvelle mesure vient remplacer une mesure existante de sorte que lesdites valeurs maximale et minimale dudit registre sont déterminées pour chaque nouvelle mesure à partir des seules N mesures précédemment enregistrées dans ledit registre.

Avantageusement, ledit nombre N de mesures est compris entre 8 et 32 et chaque mesure est effectuée tous les d millimètres, avec d compris entre 0,5 et 2 mm.

De préférence, ladite valeur de seuil est choisie de façon à définir une variation maximale d'épaisseur sur une longueur déterminée dudit article de courrier. Ladite valeur de seuil peut être déterminée selon la formule suivante : DELTA = N x pas du codeur x CC, N étant le nombre d'emplacements du registre, « pas de codeur » étant la résolution du dispositif de mesure et CC étant un coefficient de correction prédéterminé.

### Brève description des dessins

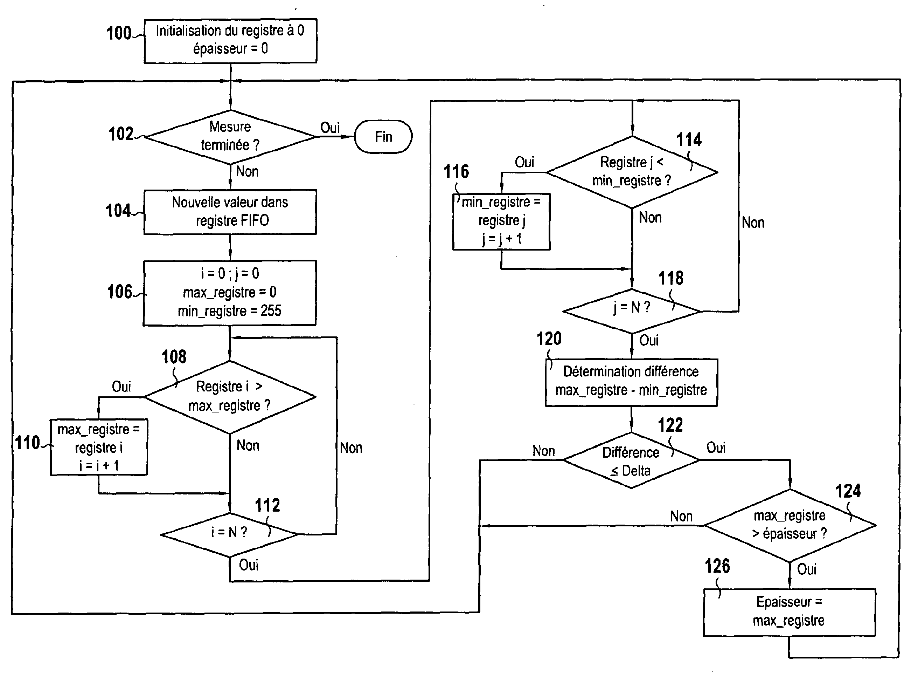

L'invention sera mieux comprise au vu de la description détaillée qui va suivre accompagnée par des exemples illustratifs et non limitatifs en regard de la figure unique montrant les différentes étapes du procédé de détermination d'épaisseur d'un article de courrier selon l'invention.

### Description détaillée de modes de réalisation

Classiquement, une machine de traitement de courrier comporte d'amont en aval (selon le sens de déplacement des articles de courrier au travers de la machine) un module d'alimentation/extraction muni d'un plateau de réception destiné à recevoir une pile d'articles de courrier, de préférence de différents formats (mixed mail), et comportant une première série de rouleaux de transport pour entraîner ces articles de courrier vers l'aval et contre une paroi de mise en référence (appelé aussi guide-pli) d'abord dans une zone de séparation comportant des rouleaux superposés d'extraction précédés par une filière et dans laquelle ces articles de courrier sont extraits automatiquement un par un de la pile puis dans une zone de transport comportant une seconde série de rouleaux de transport formés par exemple de deux ensembles adjacents de rouleaux superposés de transport avant et arrière pour convoyer les articles de courrier ainsi extraits un à un en aval du module d'alimentation/extraction, par exemple vers un module de pesée ou lorsque celui-ci est absent directement vers un module d'affranchissement de ces articles de courrier. Comme il est connu, les rouleaux supérieurs de ces rouleaux de transport sont montés fous et mobiles verticalement pour s'adapter aux différentes épaisseurs des articles de courrier et l'ensemble des rouleaux inférieurs est motorisé.

Bien entendu, cette machine de traitement de courrier comporte en outre d'une part une unité de traitement (plus particulièrement à mémoire et microprocesseur) pour la gestion de l'impression et du convoyage des articles de courrier au travers de la machine, le long de son chemin de transport, et d'autre part un détecteur de la position de ces articles de courrier (avantageusement du front de l'article de courrier) relié à cette unité de traitement et à partir duquel l'impression de l'empreinte postale est synchronisée (en fonction d'un décalage standard prédéfini définissant un emplacement prédéterminé pour l'impression).

Pour effectuer la mesure de la longueur et de la largeur des articles de courrier, le module d'alimentation/extraction comporte un ensemble de capteurs optiques permettant en liaison avec l'unité de traitement une acquisition automatique des dimensions de chacun des articles de courrier. Pour la mesure de l'épaisseur, ce module peut comporter, par exemple en sortie de la zone de séparation, un dispositif de mesure mécanique, de type palpeur, ou de préférence optique, comme celui décrit dans la demande citée en préambule, et qui délivre une valeur d'épaisseur à des temps prédéterminés (c'est-à-dire selon une fréquence d'acquisition/lecture ou d'échantillonnage prédéterminée) au fur et à mesure de l'avancée de l'article de courrier. Par exemple, il peut être choisi de mesurer cette épaisseur tous les millimètres, ce qui correspond à 219 mesures pour une enveloppe au format standard européen de 110 x 220 mm, ces mesures étant exploitées par exemple par série de N mesures successives enregistrées dans les N emplacements d'un registre de type FIFO, la N+1^{ième} mesure chassant la première, la N+2^{ième} chassant la deuxième et ainsi de suite jusqu'à la 219ième. Ce nombre N peut par exemple être compris entre 8 et 32 et les valeurs enregistrées dépendant de la résolution du dispositif de mesure peuvent par exemple être codées sur 8 bits (donc être compris entre 0 et 255) ou plus.

Selon l'invention, l'unité de traitement à laquelle sont adressées les différentes mesures d'épaisseur relevées par le dispositif de mesure est programmée, selon le procédé de traitement illustré sur la figure unique, pour déterminer de façon précise l'épaisseur des articles de courrier traversant la machine de traitement de courrier.

Ainsi, après une étape 100 d'initialisation de paramètres dans laquelle le registre FIFO est mis à zéro ainsi que l'épaisseur recherchée de l'article de courrier, il est tout d'abord recherché si la mesure est terminée dans une étape de test 102 et s'il est répondu non à ce test, il est procédé dans une étape 104 au relevé d'une nouvelle valeur d'épaisseur délivrée par le dispositif de mesure qui est alors enregistrée dans le premier emplacement du registre. Dans une étape suivante 106, la valeur maximale du registre est mise à zéro alors que la valeur minimale du registre est pour sa part mise égale, par exemple, à 255 (cette valeur correspond à la résolution d'un convertisseur 8 bits évoquée précédemment) et des indices de boucle i et j sont aussi mis à zéro. Dans une nouvelle étape de test 108 la valeur maximale du registre préenregistrée à zéro est comparée à la première valeur mesurée enregistrée dans le registre et s'il est répondu oui à ce test la valeur maximale enregistrée prend alors cette première valeur mesurée dans une étape 110 et l'indice de boucle i est incrémenté de 1. Tant que cet indice i n'est pas égal au nombre N d'emplacements du registre (test de l'étape 112), il est procédé à la comparaison de chacune des autres valeurs mesurées avec la valeur maximale enregistrée et la valeur maximale enregistrée est remplacée par la valeur mesurée si celle-ci est supérieure. Il est ensuite procédé à un nouveau test dans une étape 114 pour déterminer de même si chacune des valeurs mesurées est inférieure à la valeur minimale du registre enregistrée préalablement et s'il est répondu oui à ce test, la valeur minimale enregistrée prend, alors dans une étape 116, la valeur mesurée qui lui est inférieure et le second indice de boucle j est incrémenté de 1. Comme pour la boucle précédente, tant que cet indice j n'est pas égal au nombre N d'emplacements du registre (test de l'étape 118), il est procédé à la comparaison de chacune des autres valeurs mesurées avec la valeur minimale enregistrée et la valeur minimale enregistrée est remplacée par la valeur mesurée si celle-ci est inférieure. Puis, il est déterminé, dans une étape suivante 120, la différence entre les valeurs maximale et minimale du registre enregistrées puis dans une étape de test 122 à la comparaison de cette différence avec une valeur de seuil prédéterminé DELTA. Si la réponse au test est non il est fait retour à l'étape 102 pour la mesure d'une nouvelle valeur d'épaisseur qui est enregistrée dans le registre à moins que ce ne soit la dernière. Par contre, si la réponse est oui, il est alors effectué un nouveau test dans une étape 124, pour déterminer si la valeur maximale enregistrée préalablement est supérieure ou non à l'épaisseur de l'article de courrier enregistrée. En cas de réponse négative, il est encore fait retour comme à l'issue du test précédent à l'étape 102 mais cette fois, en cas de réponse positive, l'épaisseur de l'article de courrier recherchée prend, dans une étape 126, la valeur maximale enregistrée précédemment et ensuite il est fait retour à l'étape 102 pour lancer une nouvelle mesure à moins que ne soit la dernière.

Avec ce procédé, il est possible de s'affranchir des chocs ou rebonds du dispositif de mesure qui donneraient des valeurs d'épaisseur aberrantes par rapport à une marge d'erreur fixée au préalable et matérialisée par la valeur de seuil DELTA. En effet, si la valeur maximale enregistrée résultant d'un rebond apparaît supérieure à la valeur minimale enregistrée augmentée de cette valeur DELTA, la réponse non au test 116 aura pour conséquence la non prise en compte de cette valeur maximale comme valeur courante d'épaisseur maximale pour l'article de courrier. En outre, le calcul des valeurs maximale et minimale d'épaisseur sur la base des seules valeurs enregistrées (20 dans l'exemple cité) permet d'écarter du calcul les valeurs aberrantes au fur et à mesure de l'avancement de ces mesures, de nouvelles mesures remplaçant les anciennes réalisant ainsi une pluralité de séries de mesures successives d'épaisseur. Plus précisément, le choix de DELTA est fait en fonction de la résolution choisie (pas du codeur utilisé) pour le dispositif de mesure et de la variation d'épaisseur possible pour les articles de courrier sur une longueur déterminée de l'article de courrier. Ainsi, si l'on décide d'accepter une variation d'épaisseur de 4 mm sur une longueur de 10 mm de l'article de courrier et que l'on effectue la mesure de l'épaisseur tous les millimètres, à un N = 10 correspondra un DELTA = 4. De façon plus générale, la valeur de DELTA peut être déterminée par la formule suivante : DELTA = N x pas du codeur x CC, CC étant un coefficient de correction choisi selon l'atténuation recherchée, par exemple égal à 0,4. En effet, plus N est grand plus les pics d'épaisseur seront atténués et inversement plus DELTA est grand et moins les pics d'épaisseur seront atténués. Ainsi, un DELTA compris entre 3 et 15 est acceptable pour un N compris entre 8 et 32.

Ainsi, l'invention permet d'obtenir une mesure de l'épaisseur avec une grande précision quels que soient les défauts résultant du dispositif de mesure.

## Revendications

1. Procédé de mesure de l'épaisseur maximale d'un article de courrier lors de son déplacement au travers d'une machine de traitement de courrier consistant en les étapes successives suivantes :
. acquisition d'une mesure d'épaisseur,
. enregistrement de la valeur mesurée dans un registre,
. détermination d'une valeur maximale et d'une valeur minimale dudit registre,
. détermination d'une différence entre lesdites deux valeurs maximale et minimale et comparaison de ladite différence avec une valeur de seuil prédéterminée, et
. si ladite différence est inférieure à ladite valeur de seuil et que ladite valeur maximale est supérieure à une valeur courante d'épaisseur maximale, prendre ladite valeur maximale comme nouvelle valeur courante d'épaisseur maximale.

2. Procédé selon la revendication 1, **caractérisé en ce que** lesdites valeurs mesurées sont enregistrées successivement dans un registre de type FIFO à N emplacements distincts et chaque nouvelle mesure vient remplacer une mesure existante de sorte que lesdites valeurs maximale et minimale dudit registre sont déterminées pour chaque nouvelle mesure à partir des seules N mesures précédemment enregistrées dans ledit registre.

3. Procédé selon la revendication 2, **caractérisé en ce que** ledit nombre N d'emplacements est compris entre 8 et 32 et chaque mesure est effectuée tous les d millimètres, avec d compris entre 0,5 et 2 mm.

4. Procédé selon la revendication 2, **caractérisé en ce que** ladite valeur de seuil est choisie de façon à définir une variation maximale d'épaisseur sur une longueur déterminée dudit article de courrier.

5. Procédé selon la revendication 4, **caractérisé en ce que** ladite valeur de seuil est déterminée selon la formule suivante : DELTA = N x pas du codeur x CC, N étant le nombre d'emplacements du registre, « pas de codeur » étant la résolution du dispositif de mesure et CC étant un coefficient de correction prédéterminé.

## Claims

1. A method of measuring the maximum thickness of a mailpiece while it is moving through a mail-handling machine, the method consisting in the following successive steps:
· acquiring a thickness measurement;
· recording the measured value in a register;
· determining a maximum value and a minimum value of said register;
· determining a difference between said maximum value and said minimum value, and comparing said difference with a predetermined threshold value; and
· if said difference is less than said threshold value, and if said maximum value is greater than a current maximum thickness value, taking said maximum value as the new current maximum thickness value.

2. A method according to claim 1, **characterized in that** said measured values are recorded successively in a register of the FIFO type having N distinct locations, and each new measurement replaces an existing measurement so that said maximum value and said minimum value of said register are determined for each new measurement on the basis solely of the N previously-recorded measurements in said register.

3. A method according to claim 2, **characterized in that** said number N of locations lies in the range 8 to 32, and each measurement is taken every d millimeters, where d lies in the range 0.5 mm to 2 mm.

4. A method according to claim 2, **characterized in that** said threshold value is chosen in a manner such as to define a maximum thickness variation over a determined length of said mailpiece.

5. A method according to claim 4, **characterized in that** said threshold value is determined using the following formula: DELTA = N × pitch of the encoder × CC, where N is the number of locations in the register, "pitch of the encoder" is the resolution of the measurement device, and CC is a predetermined coefficient of correction.

## Patentansprüche

1. Verfahren zur Messung der maximalen Dicke eines Poststücks bei seiner Bewegung durch eine Postbearbeitungsmaschine, bestehend aus den folgenden aufeinanderfolgenden Schritten:
- Erfassen eines Dickenmeßwertes,
- Speichern des gemessenen Wertes in einem Register,
- Bestimmen eines maximalen Wertes und eines minimalen Wertes des Registers,
- Bestimmen einer Differenz zwischen den beiden Werten, dem maximalen und dem minimalen, und Vergleichen der Differenz mit einem vorbestimmten Schwellenwert und,
- falls die Differenz unterhalb des Schwellenwertes liegt und der maximale Wert größer als ein üblicher maximaler Dickenwert ist, Übernehmen des maximalen Wertes als neuen üblichen maximalen Dickenwert.

2. Verfahren nach Anspruch 1, **dadurch gekennzeichnet, daß** die gemessenen Werte nacheinander in einem Register vom Typ FIFO mit N getrennten Speicherplätzen gespeichert werden und jeder neue Meßwert einen existierenden Meßwert ersetzt, so daß der maximale und der minimale Wert des Registers für jede neue Messung allein anhand der zuvor in dem Register gespeicherten N Meßwerte bestimmt werden.

3. Verfahren nach Anspruch 2, **dadurch gekennzeichnet, daß** die Anzahl N von Speicherplätzen zwischen 8 und 32 liegt und jede Messung alle d Millimeter, mit d zwischen 0,5 und 2 mm, durchgeführt wird.

4. Verfahren nach Anspruch 2, **dadurch gekennzeichnet, daß** der Schwellenwert gewählt wird, um eine maximale Dickenänderung über eine bestimmte Länge des Poststücks zu definieren.

5. Verfahren nach Anspruch 4, **dadurch gekennzeichnet, daß** der Schwellenwert nach der folgenden Formel bestimmt wird: DELTA = N x Schritt des Codierers x CC, wobei N die Anzahl der Speicherplätze des Registers, "Codierer-Schritt" die Auflösung der Meßvorrichtung und CC ein vorbestimmter Korrekturkoeffizient ist.
